# EUROPÄISCHE PATENTSCHRIFT

(11) **EP 3 401 157 B1**
(45) Veröffentlichungstag und Bekanntmachung des Hinweises auf die Patenterteilung: **18.08.2021**
(21) Anmeldenummer: 18164505.2
(22) Anmeldetag: 28.03.2018
(51) Int. Cl.: B60L 15/20, B60L 50/20, B62M 6/45, B62M 6/55

(54) **REGELUNGSVERFAHREN ZUR WINDSCHATTENFAHRT EINES ZWEIRADS, STEUERGERÄT UND ZWEIRAD**
CONTROL METHOD FOR RIDING A BICYCLE IN A WINDSHADOW, CONTROL DEVICE AND BICYCLE
PROCÉDÉ DE RÉGLAGE DU SILLAGE D'UNE DEUX ROUES, APPAREIL DE COMMANDE ET DEUX ROUES

(30) Priorität: 19.04.2017 DE 102017206569
(43) Veröffentlichungstag der Anmeldung: 14.11.2018
(73) Patentinhaber: Robert Bosch GmbH, 70442 Stuttgart (DE)
(72) Erfinder: Stegmaier, Juergen, 72074 Tuebingen (DE); Dasbach, Gregor, 72074 Tuebingen (DE); Dackermann, Tim, 72072 Tuebingen (DE); Greiner, Rinaldo, 72762 Reutlingen (DE); Baumgaertner, Daniel, 72070 Tuebingen (DE); Wienss, Andreas, 72800 Eningen Unter Achalm (DE)

(56) Entgegenhaltungen:
- EP-A1- 3 152 105
- WO-A1-00/73818
- US-A1- 2016 084 942
- US-A1- 2016 257 288
- US-B1- 6 324 464

## Beschreibung

Die vorliegende Erfindung betrifft ein Regelungsverfahren zur Windschattenfahrt eines Zweirads, ein Steuergerät zur Durchführung des Regelungsverfahrens und das Zweirad mit dem Steuergerät.

### Stand der Technik

Ein Zweiradfahrer muss beim Fahren sowohl einen Rollwiderstand zwischen den mindestens zwei Reifen und dem Untergrund der Fahrtstrecke sowie einen Strömungswiderstand einer das Zweirad umströmenden Luft überwinden. Der Strömungswiderstand kann größer als der Rollwiderstand sein. Im Windschatten eines vorausfahrenden Fahrzeugs wird der Strömungswiderstand des nachfolgenden Zweirads, d.h. eines Verfolgers, erheblich reduziert, wodurch der zum Fahren benötigte Energieverbrauch für das Zweirad sinkt. Windschattenfahren ist allerdings gefährlich, sowohl für den Zweiradfahrer bzw. den Verfolger als auch für den Fahrer des vorausfahrenden Fahrzeugs, weil das Sichtfeld des Zweiradfahrers in der Regel eingeschränkt ist und ein geringer Abstand des Zweiradfahrers zum vorausfahrenden Fahrzeug vorliegt, d.h. ein Auffahren des Zweiradfahrers auf das vorausfahrende Fahrzeug leicht möglich ist.

Eine Abstandsregelung für Fahrzeuge, insbesondere Personenkraftfahrzeuge bzw. Autos, ist beispielsweise durch die Schrift DE 4 208 012 A1 offenbart, wobei in der Schrift DE 42 08 012 A1 eine Geschwindigkeit des Fahrzeugs durch die Abstandsregelung gesteuert wird. Die Schrift US 6 324 464 B1 offenbart auch eine Abstandsregelung, die aber auf ein elektrisches Zweirad bezogen ist, und in der Schrift US 2016 084 942 A1 wird die Breite des vorausfahrenden Fahrzeugs in der Abstandsregelung berücksichtigt.

EP 3 152 105 A1 offenbart ein Verfahren zur Ansteuerung des Motors eines elektrischen Zweirads, indem die Position zu einem virtuellen Trainingspartners anhand eines GPS-Signals bestimmt wird, und die Motorunterstützung vom Abstand zu diesem virtuellen Trainingspartners abhängt, um ein Windschatteneffekt zu bilden.

Der vorliegenden Erfindung liegt die Aufgabe zugrunde, das Windschattenfahren für ein Zweirad sicherer zu gestalten.

### Offenbarung der Erfindung

Die vorliegende Erfindung betrifft ein Regelungsverfahren zur Windschattenfahrt eines Zweirads, wobei die Regelung gegenüber dem Stand der Technik beispielsweise in Abhängigkeit einer erfassten Trittgröße und eines seitlichen Versatzes erfolgt. Die Erfindung betrifft auch ein Steuergerät zur Durchführung des Regelungsverfahrens und das Zweirad mit dem Steuergerät.

Das erfindungsgemäße Zweirad weist mindestens zwei Pedale und einen Trittgrößensensor auf, wobei die Trittgröße eine Trittkraft des Zweiradfahrers auf die Pedale zum Antrieb des Zweirads repräsentiert. Die Pedale sind insbesondere mittels einer Kurbelwelle miteinander verbunden. Der Trittgrößensensor ist dazu eingerichtet, die Trittgröße zu erfassen, beispielsweise wird ein Drehmoment des Fahrers an der Kurbelwelle mittels eines Drehmomentsensors oder die Trittkraft auf die Pedale mittels eines Kraftsensors erfasst. Des Weiteren ist ein Abstandssensor am Zweirad angeordnet. Der Abstandssensor ist dazu eingerichtet, einen Längsabstand zu einem vorausfahrenden Fahrzeug und einen seitlichen Versatz des Zweirads zu dem vorausfahrenden Fahrzeug zu erfassen. Es ist des Weiteren vorgesehen, einen Antriebsmotor zur Erzeugung eines Motordrehmoments zum motorischen Antrieb am Zweirad anzuordnen. Das Zweirad ist somit dazu eingerichtet, manuell mittels der Trittkraft des Zweiradfahrers auf die Pedale des Zweirads und zusätzlich motorisch mittels des Motordrehmoments angetrieben zu werden. Am Zweirad ist ferner ein Steuergerät zur erfindungsgemäßen Regelung des Motordrehmomentes angeordnet, wodurch für den Betrieb des Zweirads die Vorteile des Regelungsverfahrens zur Windschattenfahrt resultieren.

Optional ist ein Geschwindigkeitssensor am Zweirad angeordnet, welcher dazu eingerichtet ist, eine Geschwindigkeit des Zweirads zu erfassen. Außerdem weist das Zweirad optional einen Windsensor auf, welcher dazu eingerichtet ist, eine Windrichtung und/oder eine Windstärke zu erfassen. Durch die zusätzlichen Komponenten kann das im Folgenden beschriebene Regelungsverfahren optimiert werden.

Das erfindungsgemäße Regelungsverfahren zur Windschattenfahrt eines Zweirads weist in einem ersten Schritt eine Erfassung der Trittgröße auf. In einem zweiten Schritt wird der Längsabstandes des Zweirads zum vorausfahrenden Fahrzeug und in einem dritten Schritt der seitliche Versatz des Zweirads zum vorausfahrenden Fahrzeug erfasst. Abschließend wird in einem vierten Schritt das Motordrehmoments des Antriebsmotors in Abhängigkeit des Längsabstandes, des seitlichen Versatzes und der Trittgröße geregelt. Die Regelung des Motordrehmoments ist dazu eingerichtet, das Zweirad in den Windschatten des vorausfahrenden Fahrzeugs zu steuern bzw. das Zweirad in dem Windschatten des vorausfahrenden Fahrzeuges zu halten. Vorteilhafterweise wird durch den reduzierten Strömungswiderstands im Windschatten des vorausfahrenden Fahrzeugs die vom Antriebsmotor benötigte Energie reduziert bzw. Energie einer Batterie am Zweirad zur Stromversorgung des Antriebsmotors gespart, wodurch die Reichweite des motorischen Antriebs erhöht wird. Die Abhängigkeit der Regelung zur Windschattenfahrt von dem seitlichen Versatz resultiert in einer vorteilhaften Berücksichtigung einer Geometrie des Windschattens hinter dem vorausfahrenden Fahrzeug, wobei als vorausfahrendes Fahrzeug insbesondere ein Fahrrad angenommen wird. Zur Anpassung der Abhängigkeit der Regelung vom seitlichen Versatz wird vorteilhafterweise zusätzlich der Windschattenbereich des vorausfahrenden Fahrzeugs mittels des Windsensors erfasst. Ein Auffahren des Zweirads auf das vorausfahrende Fahrzeug wird durch die erfindungsgemäße Regelung unwahrscheinlich. Deshalb resultiert für das Regelungsverfahren der Vorteil, dass bei der Windschattenfahrt ein Unfallrisiko durch ein Auffahren des Zweirads auf das vorausfahrende Fahrzeug reduziert wird.

Die Regelung des Motordrehmoments wird nur bei einem Längsabstand als Sicherheitsmaßnahme kleiner als ein Sicherheitsabstand bzw. bei einer Überschreitung des Sicherheitsabstandes oder als Hilfe für das Windschattenfahren bei einem Längsabstand größer als ein Sollabstand bzw. einer Überschreitung des Sollabstandes durchgeführt. Dadurch resultiert der Vorteil, dass bei einem Abstand des Zweirads zum vorausfahrenden Fahrzeug zwischen dem Sicherheitsabstand und dem Sollabstand eine manuelle Anpassung des Abstandes zur Windschattenfahrt durchgeführt wird, so dass ein manuelles Fahrgefühl resultiert.

In dieser Ausgestaltung des erfindungsgemäßen Verfahrens wird in einem weiteren Schritt eine Anpassung des Sicherheitsabstands und/oder des Sollabstands in Abhängigkeit des seitlichen Versatzes durchgeführt. Dadurch wird vorteilhafterweise die räumliche Anordnung des Zweirads zum vorausfahrendem Fahrzeug bzw. die Geometrie des Windschattens zur Regelung des Motordrehmomentes berücksichtigt.

In einer besonders bevorzugten Weiterführung wird in einem optionalen Schritt die Geschwindigkeit des Zweirads erfasst. In einem anschließenden Schritt werden in dieser Weiterführung der Sicherheitsabstand und/oder der Sollabstand in Abhängigkeit der Geschwindigkeit angepasst. Durch diese Weiterführung entsteht der Vorteil, dass eine geschwindigkeitsabhängige Veränderung des Windschattenbereiches zur Regelung des Motordrehmoments berücksichtigt wird, wobei angenommen wird, dass sich das vorausfahrende Fahrzeug mit näherungsweise gleicher Geschwindigkeit wie das Zweirad bzw. der Verfolger bewegt. Die Windschattenfahrt wird durch diese Weiterführung komfortabler.

In einer Ausgestaltung werden in einem weiteren Schritt eine Windrichtung und/oder eine Windstärke erfasst. Anschließend wird eine Lenkinformation für den Zweiradfahrer zur Windschattenfahrt des Zweirads in Abhängigkeit des seitlichen Versatzes und/oder der Windrichtung und/oder der Windstärke erzeugt, insbesondere wird die Lenkinformation optisch dargestellt. Dadurch entsteht der Vorteil, dass der Zweiradfahrer bezüglich des Lenkens zur Windschattenfahrt unterstützt wird.

Das Steuergerät für das Zweirad ist dazu eingerichtet, das erfindungsgemäße Regelungsverfahren durchzuführen. Dazu weist das Steuergerät eine Recheneinheit auf, wobei die Recheneinheit die Trittgröße mittels des Trittgrößensensors sowie den Längsabstand und den seitlichen Versatz mittels des Abstandssensors erfasst. Die Recheneinheit erzeugt des Weiteren ein Steuersignal für den Antriebsmotor in Abhängigkeit des Längsabstandes, des seitlichen Versatzes und der Trittgröße.

In einer bevorzugten Ausgestaltung erzeugt die Recheneinheit das Steuersignal nur bei einem Längsabstand kleiner als ein Sicherheitsabstand und/oder bei einem Längsabstand größer als ein Sollabstand.

In einer Weiterführung passt die Recheneinheit den Sicherheitsabstand und/oder den Sollabstand in Abhängigkeit des seitlichen Versatzes an.

Die Recheneinheit kann in einer weiteren Ausführung zusätzlich die Geschwindigkeit des Zweirads mittels des Geschwindigkeitssensors erfassen und den Sicherheitsabstand und/oder den Sollabstand zusätzlich in Abhängigkeit der Geschwindigkeit anpassen.

In einer optionalen Ausgestaltung erfasst die Recheneinheit zusätzlich eine Windrichtung und eine Windstärke mittels des Windsensors und erzeugt ein Anzeigesignal zur Erzeugung einer Lenkinformation für den Zweiradfahrer in Abhängigkeit des seitlichen Versatzes, der Windrichtung und/oder der Windstärke.

Die vorliegende Erfindung wird nachfolgend anhand bevorzugter Ausführungsformen und beigefügter Zeichnungen erläutert.
- Figur 1:: Elektrofahrrad als Zweirad
- Figur 2:: Blockschaltbild des Steuergerätes
- Figur 3:: Ablaufdiagramm des Verfahrens
- Figur 4:: Vogelperspektive eines Modells einer Windschattenfahrt des Zweirads

### Ausführungsbeispiele

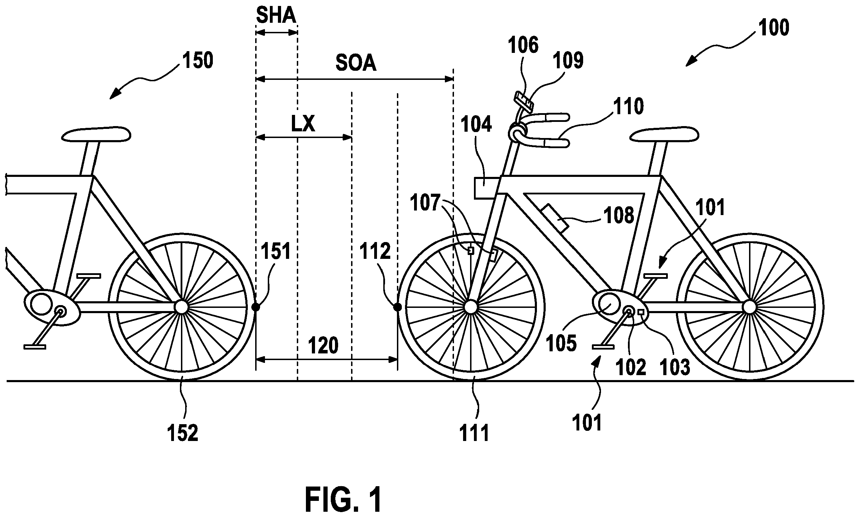

Figur 1 zeigt ein Elektrofahrrad 100 als Zweirad. Am Zweirad 100 sind zwei Pedale 101 angeordnet, wobei die Pedale 101 mittels einer Kurbelwelle 102 miteinander verbunden sind. In diesem Beispiel wird als Trittgröße ein Fahrerdrehmoment des Zweiradfahrers mittels eines Drehmomentsensors 103 an der Kurbelwelle 102 als Trittgrößensensor erfasst. Alternativ wird die Trittkraft des Zweiradfahrers auf die Pedale 101 mit Kraftsensoren 103 an den Pedalen 101 als Trittgrößensensoren erfasst. Das Elektrofahrrad 100 weist außerdem einen Abstandsensor 104 auf. Der Abstandssensor 104 ist beispielsweise ein Ultraschallsensor, ein Radarsensor, eine Stereokamera und/oder ein LIDAR-Sensor. Der Abstandssensor 104 ist dazu eingerichtet, einen Längsabstand 120 und einen seitlichen Versatz zu einem vorausfahrenden Fahrzeug 150, welches in Figur 1 ein weiteres Fahrrad 150 ist, zu erfassen. Als Längsabstand wird dabei der Abstand in Richtung der Längsachse des Zweirads 100 von einem vordersten Punkt 112 des Vorderrades 111 des Zweirads 100 bis zu einem hintersten Punkt 151 des Hinterrades 152 des vorausfahrenden Fahrzeugs 150 verstanden. Als seitlicher Versatz 420 wird der Abstand zwischen dem vordersten Punkt 112 des Vorderrades 111 und dem hintersten Punkt 151 des Hinterrades 152 des vorausfahrenden Fahrzeugs 150 in paralleler Richtung zur Querachse des Zweirads 100 verstanden, wobei angenommen wird, dass die Querachse des Zweirads 100 zur Längsachse des Zweirads 100 und zur Längsachse des vorausfahrenden Fahrzeugs senkrecht steht bzw. die Längsachse des Zweirads 100 und die Längsachse des vorausfahrenden Fahrzeugs parallel sind. Das vorausfahrende Fahrzeug 150 kann alternativ ein motorisiertes Personenkraftfahrzeug oder ein Lastkraftwagen sein. In diesem Fall ist der seitliche Versatz 420 der Abstand zwischen dem Zweirad 100 und einer nächstliegenden Seitenflächenverlängerung des Personenkraftfahrzeugs. Optional weist das Zweirad 100 einen Windsensor 108 und einen Geschwindigkeitssensor 107, beispielsweise einen Reed-Sensor oder einen GPS-Sensor, auf. Das erfindungsgemäße Elektrofahrrad 100 weist des Weiteren ein Steuergerät 106 mit einem optionalen Display 109 zur Ansteuerung eines Antriebsmotors 105 auf. Das Display 109 ist dazu eingerichtet, den Zweiradfahrer Informationen optisch anzuzeigen, beispielsweise Lenkinformationen. Optional ist zur Anzeige von Lenkinformationen vorgesehen, mindestens einen Lautsprecher oder Leuchtmitteln, insbesondere LED-Lampen, im Steuergerät 106 oder am Zweirad 100, insbesondere am Lenker 110 anzuordnen (nicht dargestellt). Der Antriebsmotor 105 ist dazu eingerichtet, ein Motordrehmoment zum Antrieb des Elektrofahrrads 100 zu erzeugen, wobei das Motordrehmoment den Antrieb durch das manuelle Fahrerdrehmoment auf die Pedale 101 unterstützt. Typischerweise wird für ein Elektrofahrrad als Zweirad 100 das Motordrehmoment des Antriebsmotors 105 in Abhängigkeit des mittels des Drehmomentsensors 103 erfassten Fahrerdrehmoments erzeugt.

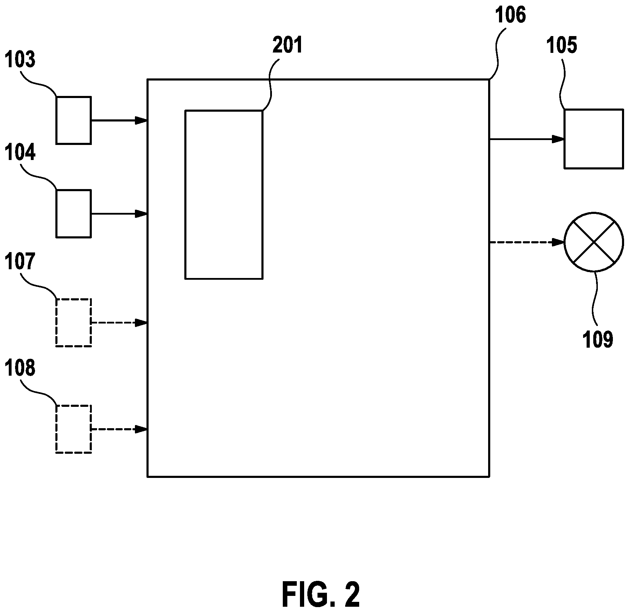

In Figur 2 ist das Steuergerät 106 mit einer Recheneinheit 201 dargestellt. Die Recheneinheit 201 erfasst die Trittgröße, beispielsweise das Fahrerdrehmoment, mittels des Trittgrößensensors 103. Des Weiteren wird von der Recheneinheit 201 der Längsabstand 120 und der seitliche Versatz des Elektrofahrrads 100 zu dem vorausfahrenden Fahrzeug 150 mittels des Abstandssensors 104 erfasst. Es kann vorgesehen sein, dass das Steuergerät 106 mittels des Geschwindigkeitssensors 107 die Geschwindigkeit des Elektrofahrrads 100 erfasst. Optional erfasst die Recheneinheit 201 des Weiteren die Windrichtung und/oder die Windstärke mittels des Windsensors 108. Die Recheneinheit 201 erzeugt ein Steuersignal für den Antriebsmotor 105 in Abhängigkeit des Längsabstandes, des seitlichen Versatzes und der Trittgröße. In einer Ausgestaltung erzeugt die Recheneinheit 201 zusätzlich ein Anzeigesignal zur Erzeugung einer Lenkinformation den Zweiradfahrer in Abhängigkeit des seitlichen Versatzes 410 und/oder der Windrichtung und/oder der Windstärke. Die Lenkinformationen des Anzeigesignals kann beispielsweise mittels des Displays 109 oder mit den Leuchtmitteln am Lenker 110 angezeigt werden.

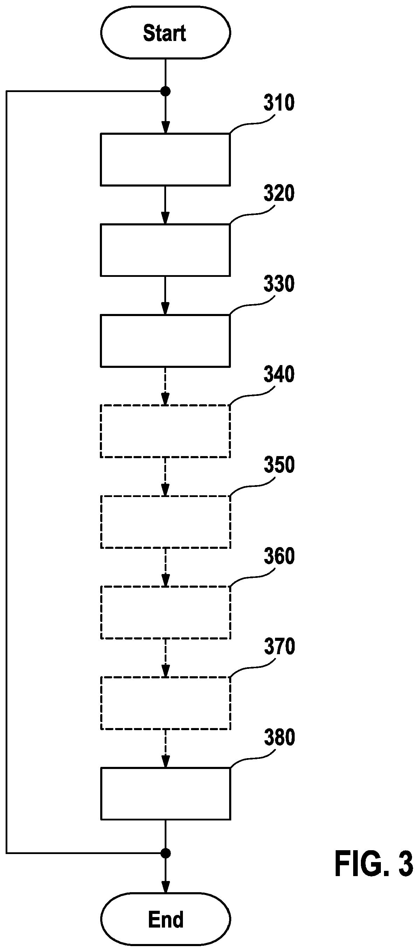

In Figur 3 ist ein Ablaufdiagramm des Regelungsverfahrens dargestellt. In einem ersten Schritt 310 wird die Trittgröße erfasst, beispielsweise das Fahrerdrehmoment. In einem zweiten Schritt 320 wird der Längsabstand 120 des Zweirads 100 zu dem vorausfahrenden Fahrzeug 150 und in einem dritten Schritt 330 wird der seitliche Versatz 410 des Zweirads 100 zu dem vorausfahrenden Fahrzeug 150 erfasst. In einem vierten Schritt 380 erfolgt abschließend die Regelung des Motordrehmoments des Antriebsmotors 105. Die Regelung 380 des Motordrehmoments wird in Abhängigkeit der Trittgröße, des Längsabstandes 120 und des seitlichen Versatzes 410 durchgeführt und ist dazu eingerichtet, das Zweirad 100 in den Windschatten des vorausfahrenden Fahrzeugs 150 zu bewegen bzw. zu steuern. Durch die Regelung 380 des Motordrehmoments wird das Windschattenfahren folglich vereinfacht und sicherer, da das Motordrehmoment beispielsweise zur Einhaltung eines vorbestimmten Längsabstandes LX geregelt wird. Beispielsweise wird durch das Regelungsverfahren das Motordrehmoment zur Einhaltung des vorbestimmten Längsabstandes LX auf das vorausfahrende Fahrzeug 150 reduziert oder erhöht, wobei der vorbestimmte Längsabstand beispielsweise eine Funktion des seitlichen Versatzes ist.

Zur Verbesserung des manuellen Fahrgefühls des Zweiradfahrers kann es vorgesehen sein, die Regelung 380 nur durchzuführen, wenn der Längsabstand 120 kleiner als ein Sicherheitsabstand SHA und/oder der Längsabstand 120 größer als ein Sollabstand SOA ist. In dieser Ausgestaltung stellt die Regelung 380 eine Hilfe bzw. eine Sicherheitsmaßnahme für das Windschattenfahren dar, wobei der Zweiradfahrer meistens das Zweirad 100 selbstständig im Windschattenbereich 420 des vorausfahrenden Fahrzeugs 150 hält.

In einem optionalen Schritt 340 vor der Regelung 380 ist es vorgesehen, eine Geschwindigkeit v des Zweirads 100 zu erfassen und in einem weiteren optionalen Schritt 350 vor der Regelung 380 den Sicherheitsabstand SHA und/oder den Sollabstand SOA in Abhängigkeit des seitlichen Versatzes 410 und/oder der erfassten Geschwindigkeit v anzupassen.

Des Weiteren kann eine Erfassung 360 der Windrichtung und der Windstärke und eine Erzeugung 370 der Lenkinformation für den Zweiradfahrer zur Windschattenfahrt des Zweirads 100 in Abhängigkeit des seitlichen Versatzes 410, der Windrichtung und der Windstärke durchgeführt werden. Der Schritt 360 zur Erfassung der Windrichtung und der Windstärke und der Schritt 370 zur Erzeugung der Lenkinformation können vor oder alternativ nach der Regelung 380 des Motordrehmoments durchgeführt werden. Zusätzlich kann die Anpassung 350 des Sicherheitsabstands in Abhängigkeit der Windrichtung und der Windstärke durchgeführt werden, wobei der Schritt 360 in diesem Fall vor dem Schritt 350 durchgeführt wird.

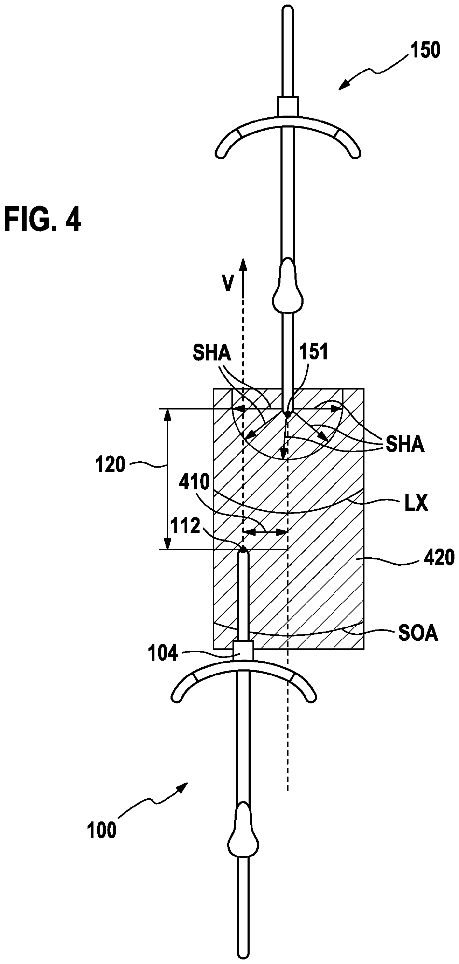

In Figur 4 ist das Zweirad 100 und ein vorausfahrendes Fahrzeug bzw. Fahrrad 150 aus einer Vogelperspektive dargestellt. Hinter dem vorausfahrenden Fahrrad 150 liegt ein Windschattenbereich 420 des Windschattens, welcher vereinfacht als rechteckig angenommen wird. Zur Fahrt des Zweirads 100 im Windschatten des vorausfahrenden Fahrzeugs 150 muss sich der vorderste Punkt 112 des Vorderrades 111 in dem Windschattenbereich 420 befinden. Der Abstandssensor 104 erfasst dazu den Längsabstand 120 zwischen dem vordersten Punkt 112 des Vorderrads 111 des Zweirads 100 und dem hintersten Punkt 151 des Hinterrads 150 des vorausfahrenden Fahrzeugs 150 in Richtung der Längsachse des Zweirads 100. Der Abstandssensor 104 ermittelt zusätzlich den seitlichen Versatz 410. Der seitliche Versatz 410 ist der Abstand zwischen der Längsachse des Zweirads 100 und der Längsachse des vorausfahrenden Fahrrads 150, wobei für die Längsachsen Parallelität angenommen wird. Die Regelung 380 des Motordrehmoments kann zur Einhaltung eines vorbestimmten Längsabstands LX erfolgen, wobei der vorbestimmte Längsabstand LX, wie in Figur 4 dargestellt, in Abhängigkeit des seitlichen Versatzes 410 angepasst wird. Alternativ erfolgt die Regelung 380 des Motordrehmoments, wenn der Längsabstand 120 einen Sicherheitsabstand SHA oder einen Sollabstand SOA überschreitet, wobei der Sicherheitsabstand SHA und/oder der Sollabstand SOA in Abhängigkeit des seitlichen Versatzes 420 angepasst werden können. In Figur 4 ist die Abhängigkeit des Sicherheitsabstandes SHA und des Sollabstandes SOA von dem seitlichen Versatz beispielhaft grafisch im Windschattenbereich 420 dargestellt. In einer Weiterführung werden der vorbestimmte Längsabstand LX, der Sicherheitsabstand SHA und/oder der Sollabstand SOA zusätzlich in Abhängigkeit der Geschwindigkeit angepasst.

## Patentansprüche

1. Regelungsverfahren zur Windschattenfahrt eines Zweirads (100), wobei das Zweirad (100) dazu eingerichtet ist, manuell mittels einer Trittkraft des Zweiradfahrers auf die Pedale (101) des Zweirads (100) und motorisch mittels eines Motordrehmoments eines Antriebsmotors (105) angetrieben zu werden, wobei das Regelungsverfahren mindestens die folgenden Schritte aufweist
• Erfassung (310) einer Trittgröße, welche die Trittkraft repräsentiert, und
• Erfassung (320) wenigstens eines Längsabstandes (120) des Zweirads (100) zu einem vorausfahrenden Fahrzeug (150),
• Erfassung (330) eines seitlichen Versatzes (410) des Zweirads (100) zum vorausfahrenden Fahrzeug (150), und
• Regelung (380) des Motordrehmoments des Antriebsmotors (105) in Abhängigkeit des Längsabstandes (120), des seitlichen Versatzes (410) und der Trittgröße zur Steuerung des Zweirads (100) in den Windschatten (420) des vorausfahrenden Fahrzeugs (150), wobei die Regelung (380) des Motordrehmoments nur erfolgt, falls der Längsabstand (120) als Sicherheitsmaßnahme einen Sicherheitsabstand (SHA) oder als Hilfe für das Windschattenfahren einen Sollabstand (SOA) überschreitet, **dadurch gekennzeichnet, dass** eine Anpassung (350) des Sicherheitsabstands (SHA) und/oder des Sollabstands (SOA) in Abhängigkeit des seitlichen Versatzes (410) erfolgt.

2. Regelungsverfahren nach Anspruch 1, **dadurch gekennzeichnet, dass** das Regelungsverfahren zusätzlich die Schritte
• Erfassung (340) einer Geschwindigkeit (v) des Zweirads (100), und
• Anpassung (350) des Sicherheitsabstands (SHA) und/oder des Sollabstands (SOA) in Abhängigkeit der Geschwindigkeit (v) aufweist.

3. Regelungsverfahren nach einem der vorhergehenden Ansprüche, **dadurch gekennzeichnet, dass** das Regelungsverfahren zusätzlich die Schritte
• Erfassung (360) einer Windrichtung und Windstärke, und
• Erzeugung (370) einer Lenkinformation für den Zweiradfahrer zur Windschattenfahrt des Zweirads (100) in Abhängigkeit des seitlichen Versatzes (410), der Windrichtung und/oder der Windstärke aufweist.

4. Steuergerät (106) für ein Zweirad (100), welches dazu eingerichtet ist, manuell mittels einer Trittkraft des Zweiradfahrers auf Pedale (101) des Zweirads (100) und motorisch mittels eines Motordrehmoments eines Antriebsmotors (105) angetrieben zu werden, wobei das Steuergerät (106) dazu eingerichtet ist, ein Regelungsverfahren nach einem der Ansprüche 1 bis 3 durchzuführen, wobei das Steuergerät (106) eine Recheneinheit (201) aufweist, wobei die Recheneinheit (201) mindestens
• eine Trittgröße mittels eines Trittgrößensensors (103) erfasst, wobei die Trittgröße die Trittkraft repräsentiert, und
• einen Längsabstand (120) des Zweirads (100) zum vorausfahrenden Fahrzeug (150) mittels eines Abstandssensors (104) erfasst,
• einen seitlichen Versatz (410) des Zweirads zum vorausfahrenden Fahrzeug (150) mittels des Abstandssensors (104) erfasst, und
• ein Steuersignal für den Antriebsmotor (105) in Abhängigkeit des Längsabstandes (120), des seitlichen Versatzes (410) und der Trittgröße erzeugt, wobei die Recheneinheit (201) das Steuersignal nur bei einem Längsabstand (120) kleiner als ein Sicherheitsabstand (SHA) als Sicherheitsmaßnehme oder bei einem Längsabstand größer als ein Sollabstand (SOA) als Hilfe für das Windschattenfahren erzeugt, **dadurch gekennzeichnet, dass**
die Recheneinheit (201) den Sicherheitsabstand (SHA) und/oder den Sollabstand (SOA) in Abhängigkeit des seitlichen Versatzes (410) anpasst.

5. Steuergerät (106) nach Anspruch 4, **dadurch gekennzeichnet, dass** die Recheneinheit (201)
• eine Geschwindigkeit (v) des Zweirads (100) mittels eines Geschwindigkeitssensors (107) erfasst, und
• den Sicherheitsabstand (SHA) und/oder den Sollabstand (SOA) in Abhängigkeit der Geschwindigkeit (v) anpasst.

6. Steuergerät nach einem der Ansprüche 4 oder 5, **dadurch gekennzeichnet, dass** die Recheneinheit
• eine Windrichtung und eine Windstärke mittels eines Windsensors (108) erfasst, und
• ein Anzeigesignal zur Erzeugung einer Lenkinformation für den Zweiradfahrer zur Windschattenfahrt des Zweirads (100) in Abhängigkeit des seitlichen Versatzes (420), der Windrichtung und/oder der Windstärke erzeugt.

7. Zweirad (100), aufweisend wenigstens folgende Komponenten
• zwei Pedale (101), welche dazu eingerichtet sind, eine manuelle Trittkraft des Zweiradfahrers zum Antrieb des Zweirads (100) aufzunehmen,
• einen Trittgrößensensor (103), welcher dazu eingerichtet ist, eine die Trittkraft repräsentierende Trittgröße zu erfassen,
• einen Abstandssensor (104), wobei der Abstandssensor (104) dazu eingerichtet ist, einen Längsabstand (120) zu einem vorausfahrenden Fahrzeug (150) und einen seitlichen Versatz (410) des Zweirads (100) zu dem vorausfahrenden Fahrzeug (150) zu erfassen,
• einen Antriebsmotor (105), welcher dazu eingerichtet ist, ein Motordrehmoment zum Antrieb des Zweirad (100) zu erzeugen, und
• ein Steuergerät (106) nach einem der Ansprüche 4 bis 6.

## Claims

1. Control method for riding a bicycle (100) in a wind shadow, wherein the bicycle (100) is configured to be driven manually by means of a pedalling force of the cyclist on the pedals (101) of the bicycle (100) and by motor by means of a motor torque of a drive motor (105), wherein the control method has at least the following steps:
• acquiring (310) a pedalling variable which represents the pedalling force, and
• acquiring (320) at least one longitudinal distance (120) of the bicycle (100) from a vehicle (150) travelling ahead,
• acquiring (330) a lateral offset (410) of the bicycle (100) with respect to the vehicle (150) travelling ahead, and
• controlling (380) the motor torque of the drive motor (105) as a function of the longitudinal distance (120), the lateral offset (410) and the pedalling variable for controlling the bicycle (100) in the wind shadow (420) of the vehicle (150) travelling ahead, wherein the motor torque is controlled (380) only if the longitudinal distance (120) exceeds as a safety measure, a safety distance (SHA) or exceeds a target distance (SOA) as an aid for riding in a wind shadow, **characterized in that** the safety distance (SHA) and/or the target distance (SOA) are adapted (350) as a function of the lateral offset (410).

2. Control method according to Claim 1, **characterized in that** the control method additionally comprises the steps of:
• acquiring (340) a velocity (v) of the bicycle (100), and
• adapting (350) the safety distance (SHA) and/or the target distance (SOA) as a function of the velocity (v).

3. Control method according to one of the preceding claims, **characterized in that** the control method additionally comprises the steps of:
• acquiring (360) a wind direction and wind strength, and
• generating (370) steering information for the cyclist for riding the bicycle (100) in a wind shadow, as a function of the lateral offset (410), the wind direction and/or the wind strength.

4. Control device (106) for a bicycle (100) which is configured to be driven manually by means of a pedalling force of the cyclist on the pedals (101) of the bicycle (100) and by motor by means of a motor torque of a drive motor (105), wherein the control device (106) is configured to carry out a control method according to one of Claims 1 to 3, wherein the control device (106) has a computing unit (201), wherein the computing unit (201) at least
• acquires a pedalling variable by means of a pedalling variable sensor (103), wherein the pedalling variable represents the pedalling force, and
• acquires a longitudinal distance (120) of the bicycle (100) from the vehicle (150) travelling ahead, by means of a distance sensor (104),
• acquires a lateral offset (410) of the bicycle with respect to the vehicle (150) travelling ahead, by means of the distance sensor (104), and
• generates a control signal for the drive motor (105) as a function of the longitudinal distance (120), the lateral offset (410) and the pedalling variable, wherein the computing unit (201) generates the control signal only when there is a lateral distance (120) which is less than a safety distance (SHA) as a safety measure, or when there is a longitudinal distance which is greater than a target distance (SOA) as an aid for riding in a wind shadow, **characterized in that**
the computing unit (201) adapts the safety distance (SHA) and/or the target distance (SOA) as a function of the lateral offset (410).

5. Control device (106) according to Claim 4, **characterized in that** the computing unit (201)
• acquires a velocity (v) of the bicycle (100) by means of a velocity sensor (107), and
• adapts the safety distance (SHA) and/or the target distance (SOA) as a function of the velocity (v).

6. Control device according to one of Claims 4 and 5, **characterized in that** the computing unit
• acquires a wind direction and a wind strength by means of a wind sensor (108), and
• generates a display signal for generating steering information for the cyclist for riding the bicycle (100) in a wind shadow, as a function of the lateral offset (420), the wind direction and/or the wind strength.

7. Bicycle (100) having at least the following components:
• two pedals (101) which are configured to take up a manual pedalling force of the cyclist for driving the bicycle (100),
• a pedalling variable sensor (103) which is configured to acquire a pedalling variable which represents the pedalling force,
• a distance sensor (104), wherein the distance sensor (104) is configured to acquire a longitudinal distance (120) from a vehicle (150) which is travelling ahead, and a lateral offset (410) of the bicycle (100) with respect to the vehicle (150) which is travelling ahead,
• a drive motor (105) which is configured to generate a motor torque for driving the bicycle (100), and
• a control device (106) according to one of Claims 4 to 6.

## Revendications

1. Procédé de régulation de la conduite de sillage d'un deux-roues (100), le deux-roues (100) étant conçu pour être entraîné manuellement à la force de pédalage du conducteur du deux-roues exercée sur les pédales (101) du deux-roues (100) et par moteur au moyen d'un couple moteur d'un moteur d'entraînement (105), le procédé de commande comportant au moins les étapes suivantes :
• détection (310) d'une grandeur de pédalage qui représente la force de pédalage, et
• détection (320) d'au moins une distance longitudinale (120) entre le deux-roues (100) et un véhicule (150) qui précède,
• détection (330) d'un décalage latéral (410) du deux-roues (100) par rapport au véhicule (150) qui précède, et
• régulation (380) du couple moteur du moteur d'entraînement (105) en fonction de la distance longitudinale (120), du décalage latéral (410) et de la grandeur de pédalage pour commander le deux-roues (100) dans le sillage (420) du véhicule (150) qui précède, la régulation (380) du couple moteur n'intervenant que si la distance longitudinale (120) dépasse une distance de sécurité (SHA) comme mesure de sécurité ou une distance cible (SOA) comme aide à la conduite de sillage, **caractérisée en ce qu'**une adaptation (350) de la distance de sécurité (SHA) et/ou de la distance cible (SOA) est effectuée en fonction du décalage latéral (410) .

2. Procédé de régulation selon la revendication 1, **caractérisé en ce que** le procédé de régulation comprend en outre les étapes suivantes :
• détection (340) d'une vitesse (v) du deux-roues (100), et
• adaptation (350) de la distance de sécurité (SHA) et/ou de la distance cible (SOA) en fonction de la vitesse (v).

3. Procédé de régulation selon l'une des revendications précédentes, **caractérisé en ce que** le procédé de régulation comprend en outre les étapes suivantes :
• détection (360) de la direction et de la force du vent, et
• génération (370) d'une information de direction destinée au conducteur du deux-roues et relative à la conduite de sillage du deux-roues (100) en fonction du décalage latéral (410), de la direction du vent et/ou de la force du vent.

4. Dispositif de commande (106) destiné à un deux-roues (100) qui est conçu pour être entraîné manuellement par une force de pédalage du conducteur du deux-roues exercée sur les pédales (101) du deux-roues (100) et par moteur au moyen d'un couple moteur d'un moteur d'entraînement (105), le dispositif de commande (106) étant conçu pour mettre en œuvre un procédé de régulation selon l'une des revendications 1 à 3, le dispositif de commande (106) comportant une unité de calcul (201), l'unité de calcul (201) détectant au moins
• une grandeur de pédalage au moyen d'un capteur de grandeur de pédalage (103), la taille de pas représentant la force de la marche, et
• une distance longitudinale (120) du deux-roues (100) au véhicule (150) qui précède au moyen d'un capteur de distance (104),
• un décalage latéral (410) du deux-roues par rapport au véhicule (150) qui précède au moyen du capteur de distance (104), et générant
• un signal de commande du moteur d'entraînement (105) en fonction de la distance longitudinale (120), du décalage latéral (410) et de la grandeur de pédalage, l'unité de calcul (201) ne générant le signal de commande que si la distance longitudinale (120) est inférieure à une distance de sécurité (SHA) comme mesure de sécurité ou si une distance longitudinale est supérieure à une distance cible (SOA) comme aide à la conduite de sillage, **caractérisé en ce que** l'unité de calcul (201) adapte la distance de sécurité (SHA) et/ou la distance cible (SOA) en fonction du décalage latéral (410).

5. Dispositif de commande (106) selon la revendication 4, **caractérisé en ce que** l'unité de calcul (201)
• détecte une vitesse (v) du deux-roues (100) au moyen d'un capteur de vitesse (107), et
• adapte la distance de sécurité (SHA) et/ou la distance cible (SOA) en fonction de la vitesse (v).

6. Dispositif de commande selon l'une des revendications 4 et 5, **caractérisé en ce que** l'unité de calcul
• détecte une direction du vent et une force du vent au moyen d'un capteur de vent (108), et
• génère un signal d'affichage pour générer une information de direction destinée au conducteur du deux-roues et relative à la conduite de sillage du deux-roues (100) en fonction du décalage latéral (420), de la direction du vent et/ou de la force du vent.

7. Deux-roues (100) comprenant au moins les composants suivants
• deux pédales (101) qui sont conçues pour absorber une force de pédalage manuel du deux-roues pour entraîner le deux-roues (100),
• un capteur de grandeur de pédalage (103) qui est conçu pour détecter une grandeur de pédalage représentant la force de pédalage,
• un capteur de distance (104), le capteur de distance (104) étant conçu pour détecter une distance longitudinale (120) par rapport à un véhicule (150) qui précède et un décalage latéral (410) du deux-roues (100) par rapport au véhicule (150) qui précède,
• un moteur d'entraînement (105) qui est conçu pour générer un couple moteur destiné à entraîner le deux-roues (100), et
• un dispositif de commande (106) selon l'une des revendications 4 à 6.
